# EUROPEAN PATENT APPLICATION

(11) **EP 4 715 393 A1**
(43) Date of publication of application: **25.03.2026**
(21) Application number: 25197957.1
(22) Date of filing: 25.08.2025
(51) Int. Cl.: G01P 15/097, G01P 1/00, G01P 15/08

(54) **HIGH DYNAMIC RANGE VIBRATING BEAM ACCELEROMETER**

(30) Priority: 18.09.2024 US 202463696259 P; 04.06.2025 US 202519228612
(71) Applicant: Honeywell International Inc., Charlotte, NC 28202 (US)
(72) Inventor: MILNE, James Christopher, Charlotte, 28202 (US); BECKA, Stephen F., Charlotte, 28202 (US)
(74) Representative: Haseltine Lake Kempner LLP

(57) **Abstract**

An accelerometer system including an accelerometer comprising a proof mass assembly the proof mass assembly comprising: a plurality of dampening plates; at least two proof mass elements, wherein each proof mass element of the at least two proof mass elements is disposed between two dampening plates of the plurality of dampening plates; and a plurality of resonators, wherein at least two resonators of the plurality of resonators is coupled to each proof mass element of the at least two proof mass elements.

## Description

This application claims the benefit of U.S. Provisional Patent Application No. 63/696,259, filed on September 18, 2024, and entitled "HIGH DYNAMIC RANGE VIBRATING BEAM ACCELEROMETER," the entire content of which is incorporated herein by reference.

### TECHNICAL FIELD

The present disclosure relates to vibrating beam accelerometers, also referred to as resonating beam accelerometers.

### BACKGROUND

Accelerometers function by detecting the displacement of a proof mass under inertial forces. One technique of detecting the force and acceleration is to measure the displacement of the mass relative to a frame. Another technique is to measure the force induced in resonators as they counteract inertial forces of the proof mass. The acceleration may, for example, be determined by measuring the change in the frequencies of the resonators due to the change in load generated by the Newtonian force of a proof mass experiencing acceleration.

### SUMMARY

The disclosure describes various examples of vibrating beam accelerometers (VBAs) and techniques for making VBAs. A VBA with a single proof mass may be limited in a range of detectable acceleration values, e.g., due to the configuration of the proof mass. Thus, for objects configured to undergo acceleration in different acceleration ranges (e.g., high G-force, low G-force, medium G-force), multiple VBAs configured to acceleration ranges may be needed, which may increase the overall complexity and profile of the acceleration system for an object.

Some example VBAs described herein may include one or more proof mass assemblies with a plurality (e.g., three or more) of proof mass elements. Each proof mass element may be configured to a different acceleration range. Within the VBA, each proof mass element may react differently and independently to an acceleration experienced by the VBA. The output signals from the plurality of proof mass elements (e.g., from oscillator circuitry coupled to resonator(s) on each proof mass element) may then be used by an accelerometer system to determine the acceleration experienced by an object that the VBA is coupled to. The inclusion of the plurality of proof mass elements within the VBA may allow the accelerometer system to sense acceleration values across a broader range without requiring multiple VBAs and/or significantly larger VBAs.

Some example VBAs described herein may include proof mass elements with electrical connections disposed on side(s) of the proof mass elements. The electrical connections may electrically couple opposite surfaces of the proof mass element (e.g., resonators disposed on the opposite surfaces of the proof mass element) to processing circuitry of the accelerometer system through the side(s) of the proof mass element. By comparison, other VBAs may electrically couple the opposite surfaces of the proof mass element to the processing circuitry directly via the opposite surfaces of the proof mass element. The use of the side(s) of the proof mass element to form electrical connections may reduce the overall profile of the VBA and/or improve dampening and/or thermal insulation properties of dampening plates within the VBA (e.g., by reducing or eliminating channels within the dampening plates to allow for electrical connections to the opposite surfaces of the proof mass element).

In some examples, this disclosure is directed to an accelerometer system comprising an accelerometer comprising a proof mass assembly the proof mass assembly comprising: a plurality of dampening plates; at least two proof mass elements, wherein each proof mass element of the at least two proof mass elements is disposed between two dampening plates of the plurality of dampening plates; and a plurality of resonators, wherein at least two resonators of the plurality of resonators is coupled to each proof mass element of the at least two proof mass elements.

In some examples, this disclosure is directed to a proof mass assembly for an accelerometer system, the proof mass assembly comprising a plurality of proof mass sub-assemblies, each proof mass sub-assembly comprising: a proof mass element; two dampening plates, wherein the proof mass element is disposed between the two dampening plates along a sensing axis of the accelerometer system; and at least two resonators, each resonator of the at least two resonator being coupled to an opposite surface of the proof mass element, wherein each proof mass sub-assembly of the plurality of proof mass sub-assemblies is configured to react in response to a different range of acceleration values.

In some examples, this disclosure is directed to an accelerometer system comprising: a processor; and an accelerometer comprising a proof mass assembly the proof mass assembly comprising: two dampening plates; a proof mass element disposed between the two dampening plates of; two resonators, wherein each resonator of the two resonators is coupled to an opposite surface of the proof mass element; two protrusions extending from an outer perimeter of the proof mass element; and signal traces extending between each resonator and a respective protrusion, wherein the processor is configured to determine an acceleration experienced by the accelerometer based on electrical signals from the two resonators, and wherein the two resonators are electrically coupled to the processor through the two protrusions.

The details of one or more examples are set forth in the accompanying drawings and the description below. Other features, objects, and advantages will be apparent from the description and drawings, and from the claims.

### BRIEF DESCRIPTION OF THE FIGURES

FIG. 1 is a conceptual diagram illustrating an example vibrating beam accelerometer (VBA).
FIG. 2 is a conceptual diagram illustrating an example proof mass of the VBA of FIG. 1.
FIG. 3 is a conceptual diagram illustrating a side view of an example proof mass assembly within the VBA of FIG. 1.
FIG. 4 is a conceptual diagram illustrating an example side view of the proof mass assembly of FIG. 3.
FIG. 5 is a flow chart illustrating an example process of assembling a proof mass of an example VBA.
FIG. 6 is a flow chart illustrating an example process of forming a proof mass assembly of an example VBA.

### DETAILED DESCRIPTION

Navigation systems and positioning systems rely on the accuracy of accelerometers, such as vibrating beam accelerometers (VBAs) to perform critical operations in various environments. VBAs use a proof mass assembly including resonators, e.g., vibrating beams, double ended tuning forks, or the like, to measure acceleration. For example, a resonator may determine the displacement of a proof mass with a high degree of accuracy from which an acceleration experienced by the VBA may be determined. Resonators utilizing beams, also referred to as tines, made of a piezo-electric material use electrodes on surfaces of the beams to drive the piezo-electric beams into resonance. For example, opposing surfaces of the resonator beams may have electrodes configured to have opposite charge spatially aligned across from each other.

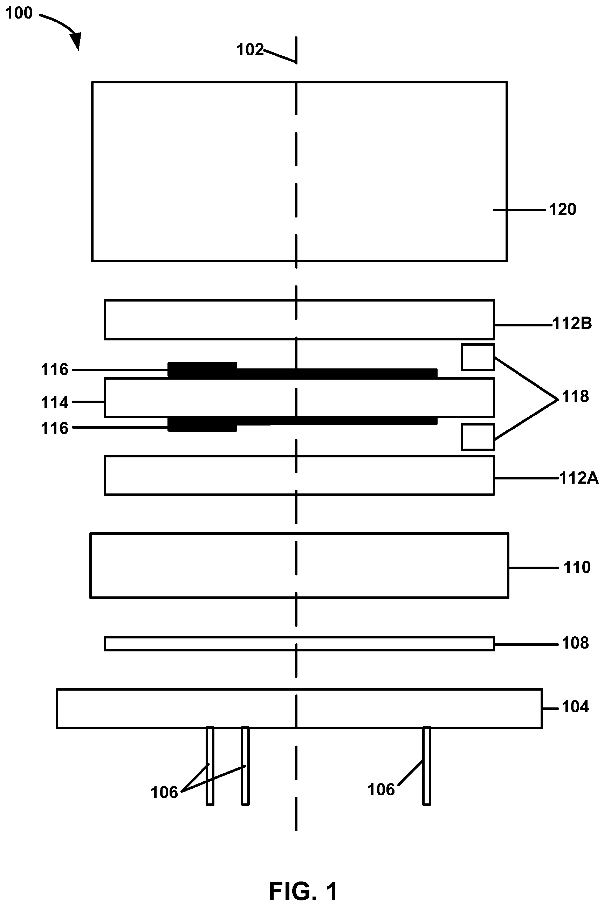

FIG. 1 is a conceptual diagram illustrating an example VBA 100. VBA 100 may include, but is not limited to, a base 104 (alternatively referred to herein as "header 104"), electrical connector(s) 106 extending from base 104, circuitry 108, isolator 110, dampening plates 112A-112B (collectively referred to herein as "dampening plates 112"), proof mass element 114, resonators 116, spacers 118, and housing 120 (alternatively referred to herein as "can 120"). The components of VBA 100 may be arranged along a sensing axis 102 of VBA 100. Sensing axis 102 may extend from a proximal end of VBA 110 (e.g., a proximal end of base 104) to a distal end of VBA 100 (e.g., a distal end of housing 120).

Base 104 of VBA 100 may connect VBA 100 to an object. Base 104 may include one or more openings and/or recesses, each configured to receive a fastener or other fixation element. Base 104 may include one or more channels extending through base 104 (e.g., along sensing axis 102). The one or more channels may be configured to receive connector(s) 106 extending from circuitry 108 and out of VBA 100.

Connector(s) 106 may be electrically coupled to circuitry 108 and electrically isolated from base 104. Connector(s) 106 allow for the travel of electrical signals into and out of VBA 100. Circuitry 108 may be electrically coupled to resonators 116 and may direct electrical current into resonators 116 and/or receive electrical signals from resonators 116. Circuitry 108 may direct electrical signals into and out of VBA 100 (e.g., into processor(s) or processing circuitry of an accelerometer system) through corresponding connector(s) 106.

VBA 100 may include a proof mass assembly. The proof mass assembly may include a proof mass element 114 disposed between dampening plates 112 along sensing axis 102. The proof mass assembly may further include resonators 116 disposed on surfaces of proof mass element 114. Spacers 118 within the proof mass assembly may be disposed between dampening plates 112 and proof mass element 114 and define gaps between dampening plates 112 and proof mass element 114. Resonators 116 may be disposed within the gaps on either side of proof mass element 114.

Dampening plates 112 are connected to proof mass element 114 via spacers 118. Dampening plates 112 may be connected to spacers 118 via an adhesive (e.g., a brazing material, a solder material, epoxy). Spacers 118 may define a gap along sensing axis 102 between each dampening plate 112 and proof mass element 114. The gap may be sized to allow for movement of proof mass element 114 and/or resonators 116 in response to VBA 100 experiencing an acceleration along sensing axis 102. In some examples, spacer 118 is integral to proof mass element 114 and/or to dampening plates 112. Dampening plates 112 may be affixed to spacers 118 and/or to proof mass element 114 via an adhesive, via one or more mechanical fasteners, and/or via an interface between corresponding elements on dampening plates 112 and on spacers 118 and/or proof mass element 114. For example, one of dampening plates 112 (e.g., dampening plate 112A) may define protrusions on a surface which may be disposed within recesses on a corresponding spacer 118 and/or on a surface of proof mass element 114 to form the interface. In other examples, dampening plates 112 may define the recesses and spacers 118 and/or proof mass element 114 may define the protrusions. Dampening plates 112 may limit a range of rotation, motion, and/or displacement of proof mass element 114 within VBA 100. Dampening plates 112 may at least partially thermally insulate proof mass element 114

Proof mass element 114 may include an inner movable portion (alternatively referred to herein as the "proof mass movable portion") and an outer rigid portion (alternatively referred to herein as the "proof mass support"). The proof mass support may define a frame of proof mass element 114. Each of resonators 116 may have opposite ends connected to, integral with, mounted to, and/or attached to the proof mass movable portion and the proof mass support, respectively.

Each of resonators 116 may vibrate at a certain frequency based on the geometry of resonator 116 and/or material properties (e.g., density, elastic modulus) of resonator 116. Circuitry 108 may transmit electrical signals to each resonator 116 to induce vibrations within resonators 116. Resonators 116 may change frequency in response to the application of forces on resonators 116 along sensing axis 102. When VBA 100 experiences acceleration, a portion of proof mass element 114 (e.g., the movable portion of proof mass element 114 may deflect relative to the proof mass support, e.g., along sensing axis 102). The movable portion of proof mass element 114 may be referred to herein as the "proof mass." The deflection of the proof mass may induce axial tension along one of resonators 116 and axial compression along the other of resonators 116, thereby altering the vibration frequencies of resonators 116.

Resonators 116 may be electrically coupled to circuitry 108 and to connector(s) 106 through circuitry 108. For example, a wire bond may be formed on a same surface of proof mass element 114 that a corresponding resonator 116 is coupled to and electrical contacts and/or signal traces may electrically couple the wire bond to the respective resonator 116. A wire forming the wire bond at one end may be electrically coupled to circuitry 108 at an opposite end. Electrical wires may be electrically coupled to circuitry 108 at one end and to resonators 116 at an opposite end via protrusion(s) disposed around an outer perimeter of proof mass element 114. Each protrusion(s) may be at least partially electrically conductive and may be electrically coupled to a corresponding resonator 116 via electrical contacts and/or signal traces extending along a surface of proof mass element 114. Electrical connections via the protrusion(s) (e.g., as opposed to the use of wire bonds) may reduce an overall profile the proof mass assembly and/or may improve the thermal insulation properties of dampening plates 112 (e.g., by reducing the size of or removing a central channel within dampening plates 112 used to form the wire bonds). Each resonator 116 may be electrically coupled to one or more corresponding protrusions via one or more techniques including, but are not limited to, a wire bond between resonator 116 and each corresponding protrusion or electrical trace(s) extending along the surface of proof mass element 114 between resonator 116 and corresponding protrusion(s).

Electrical signals corresponding to the vibration frequencies and the changes in vibration frequencies may be outputted from VBA 100 (e.g., via connector(s) 106 and circuitry 108) to processors and/or processing circuitry of an accelerometer system, which may then determine the direction (along sensing axis 102) and magnitude of a force exerted on the proof mass (e.g., and by extension the acceleration of the proof mass) based on the changes in the vibration frequencies of resonators 116.

Resonators 115 and/or proof mass element 114 may be configured for specific acceleration ranges. For example, resonators 116 and/or proof mass element 114 may be configured to detect acceleration of the proof mass at less than less than 5 g (less than about 9.81 m/s²), between 2 g and 30 g (e.g., between about 9.81 m/s² and about 294.3 m/s²), or between 20 g and 300 g (e.g., between about 294.3 m/s² and about 3000 m/s²). Configuring resonators 116 and/or proof mass element 114 for different acceleration ranges may include changing the dimensions of resonators 116 and/or proof mass element 114 (e.g., of the proof mass of proof mass element 114) and/or to a relative distance between resonators 116 (e.g., along sensing axis 102). In other examples of system 100, resonators 116 and/or proof mass element 114 may be configured for an acceleration range not listed above.

In some examples, the object is configured to undergo acceleration within the different acceleration ranges during the course of travel. In such examples, the accelerometer system needs multiple proof mass assemblies configured for the different acceleration ranges to accurately determine the acceleration of the object throughout the course of travel.

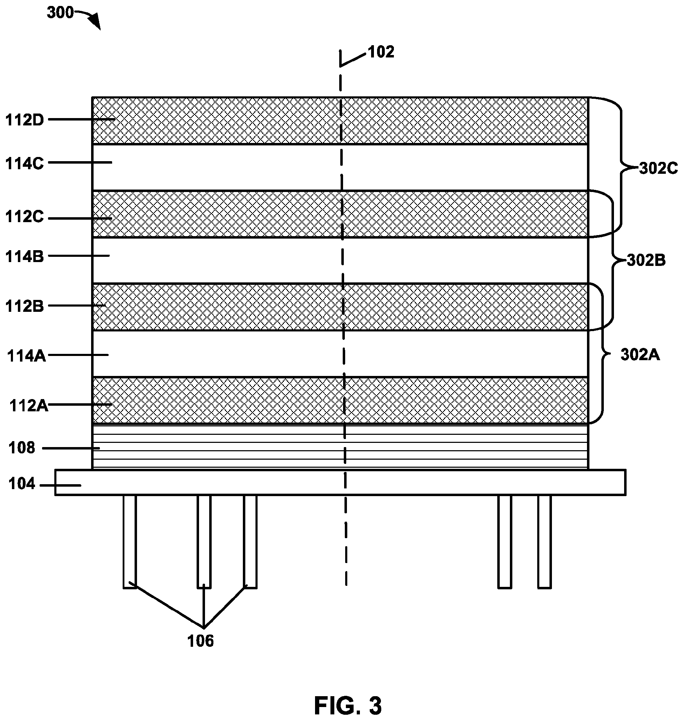

VBA 100 may include one proof mass assembly (e.g., as illustrated in FIG. 1), or two or more proof mass sub-assemblies that jointly define the proof mass assembly (e.g., as illustrated in FIG. 3). Each proof mass sub-assembly may include proof mass element 114 and resonator 116 configured for a different acceleration range.

In such examples, proof mass sub-assemblies may be identical to the proof mass assembly illustrated in FIG. 1 and may include one proof mass element 114, two dampening plates 112, and accompanying resonators 116 and spacers 118. The proof mass sub-assemblies may be stacked on top of each other along sensing axis 102. Adjacent proof mass sub-assemblies along sensing axis 102 may share common dampening plates 112.

VBA 100 may transmit electrical signals from each proof mass sub-assembly (e.g., corresponding to the changes in vibration frequencies of resonators 116 within each proof mass sub-assembly) to the processor and/or processing circuitry of the accelerometer system. The processor and/or processing circuitry may then determine the acceleration of the object based on electrical signals from one or more of the proof mass sub-assemblies and/or other sensor(s) (e.g., temperature sensing element(s)). Temperature sensing element(s) may include, but are not limited to, thermistors, thermocouples, or the like. Accelerometer system with a single VBA 100 with multiple proof mass sub-assemblies configured to different acceleration ranges may be less complex and occupy a lower profile than other accelerometer systems with multiple VBAs to monitor the same acceleration range.

Isolator 110 and housing 120 may physically isolate the components of the proof mass assembly and/or sub-assemblies from an environment external to VBA 100. Isolator 110 and/or housing 120 may thermally insulate the components of the proof mass assembly and/or sub-assemblies. In some examples, isolator 110 and/or housing 120 may isolate the components of the proof mass assembly and/or sub-assemblies from the effects of thermal expansion and/or contraction of other components of the object around VBA 100 and/or of the other components of VBA 100.

Dampening plates 112, proof mass element 114, and/or resonators 116 may be formed from a same material. The use of same or similar materials may reduce a mismatch between coefficient of thermal expansion (CTE) values between different components along interfaces (e.g., between proof mass element 114 and resonators 116, between dampening plates 112 and proof mass element 114). Reducing the mismatch in CTEs between different components may reduce strain and/or stress on different components resulting from the components expanding and/or contracting at different rates in response to changes in temperature. The reduction in strain and/or stress on components in response to changes in temperature may reduce errors within the system and improve the accuracy of the outputs generated by VBA 100 (e.g., improve the accuracy of the changes in vibration frequencies of resonators 116 in response to acceleration of VBA 100).

The material may include an optically transparent material including, but is not limited to, a crystalline quartz. In some examples, dampening plates 112, proof mass element 114, and/or resonators 116 may be at least partially formed via a selective laser etching (SLE) technique. The SLE technique may be used to form fixation features (e.g., channels, protrusions, recesses) on surfaces of dampening plates 112, proof mass element 114, and/or resonators 116. The fixation features may interface with each other to allow for the fixation of dampening plates 112 to proof mass element 114 and/or of resonators 116 to proof mass element 114 without use of an adhesive or of a mechanical fixation element.

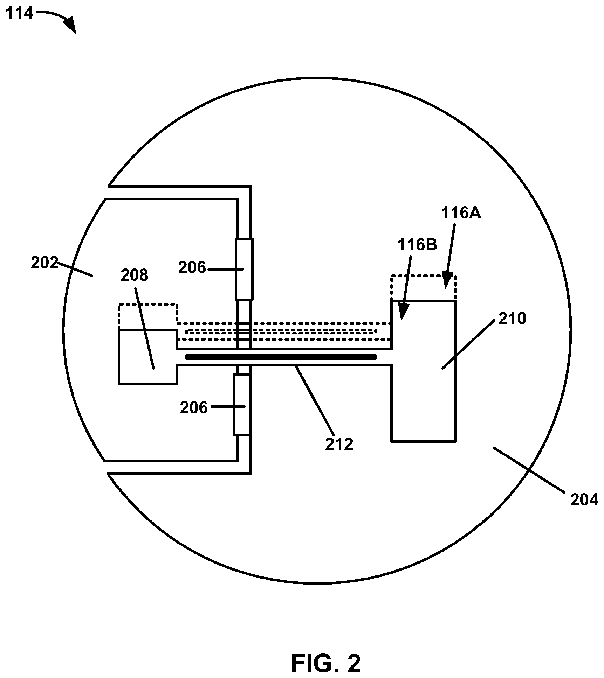

FIG. 2 is a conceptual diagram illustrating an example proof mass element 114 of VBA 100 of FIG. 1. As illustrated in FIG. 2, proof mass element 114 includes a proof mass 202, a proof mass support 204, and hinges 206 connecting proof mass movable portion 202 to proof mass support 204. Resonators 116A, 116B (collectively referred to herein as "resonators 116") are coupled to opposite surfaces of proof mass element 114. Each resonator 116 may include a first end 208 coupled to proof mass 202, a second end 210 coupled to proof mass support 204, and a bridge 212 connecting first end 208 to second end 210.

Proof mass element 114 may extend along a reference plane. For example, proof mass 202, proof mass support 204, and hinges 206 may extend along the reference plane. When proof mass element 114 is disposed within VBA 100, the reference plane is orthogonal to sensing axis 102 (not pictured in FIG. 2). Each of resonators 116 may also extend from first end 208 to second end 210 along an axis parallel to the reference plane. When proof mass element 114 is disposed within VBA 100, each of resonators 116 may be disposed along the axis and orthogonal to sensing axis 102.

Proof mass element 114 may be formed from an optically transparent material, e.g., a crystalline quartz. Proof mass 202, proof mass support 204, and hinges 206 may be formed from the same optically transparent material, e.g., monolithically from the same material. In other examples, one or more of proof mass 202, proof mass support 204, or hinges 206 may be formed separately and subsequently attached, e.g., via the SLE technique. In some examples, proof mass 202, proof mass support 204, and/or hinges 206 may be formed from a metallic material (e.g., a metallic alloy). In such examples, proof mass element 114, dampening plates 112, and spacers 118 may be formed from one or more metallic materials.

Resonators 116 may be formed from a piezoelectrical material, including, but is not limited to, quartz (SiO₂), Berlinite (AlPO₄), gallium orthophosphate (GaPO₄), thermaline, barium titanate (BaTiO₃), lead zirconate titanate (PZT), zinc oxide (ZnO), or aluminum nitride (AlN). Resonators 116 may be monolithically formed with proof mass element 114 and may be formed from a same or different material as proof mass element 114.

First end 208 and second end 210 of each resonator 116 may be connected by two elongated tines defining bridge 212. The two elongated tines may extend parallel to each other along a longitudinal axis of resonator 116. In other examples, resonator 116 may have a different number of elongated tines defining bridge 212 (e.g., a single elongated tine, three or more elongated tines). In some examples, the elongated tines defining bridge 212 may or may not be parallel to each other or to the reference plane of proof mass element 114. First and second ends 208, 210 of each resonator 116 may be attached to or monolithically etched within proof mass 202 and proof mass support 204, respectively. First and second ends 208, 210 of resonators 116 may be attached to proof mass 202 and proof mass support 204, respectively, with or without the use of adhesives (e.g., epoxy).

Resonators 116 may be mounted on opposite surfaces of proof mass element 114. For example, resonator 116A may be mounted on a top surface of proof mass element 114 and resonator 116B may be mounted on a bottom surface of proof mass element 114. Resonators 116 may be offset from each other, e.g., relative to a center line of proof mass element 114. Resonators 116A and 116B may be configured to receive opposite axial compressive/tensile forces in response to movement of proof mass 202 about hinges 206 and relative to proof mass support 204. For example, in response to proof mass 202 moving in an upward direction relative to proof mass support 204, resonator 116A may receive an axial compressive force and resonator 116B may receive an axial tensile force. In another example, in response to proof mass 202 moving in a downward direction relative to proof mass support 204, resonator 116A may receive an axial tensile force and resonator 116B may receive an axial compressive force. In this manner, the difference in vibration frequencies of resonators 116 in response to the compressive/tensile forces may be used by processors and/or processing circuitry of the accelerometer system to determine the direction (e.g., along sensing axis 102) and magnitude of the acceleration experienced by VBA 100.

The dimensions of proof mass element 114 and/or of resonators 116 may be selected to configure proof mass element 114 and/or resonators 116 for a specific acceleration range. For example, the dimensions of proof mass 202 and/or of elongated tine(s) defining bridge 212 may vary based on the intended acceleration range the proof mass assembly containing proof mass element 114 and resonators 116 is configured to sense within.

Proof mass element 114 may include electrical contacts and/or signal traces (not pictured) extending along the surfaces (e.g., the upper and lower surfaces) of proof mass element 114. The electrical contacts and/or signal traces may electrically couple each resonator 116 with a respective protrusion on the outer perimeter of proof mass element 114 (e.g., on proof mass support 204). The electrical contacts and/or signal traces may transmit an electrical signal (e.g., a drive signal) from circuitry 108 of VBA 100 into resonators 116 to cause resonators 116 to vibrate. The electrical contacts and/or signal traces may also transmit electrical signals from resonators 116 to circuitry 108 and processors and/or processing circuitry of the accelerometer system. The electrical signals from resonators 116 may be used to determine the changes in vibration frequencies of resonators 116 and, by extension, the direction and magnitude of the acceleration experienced by VBA 100.

FIG. 3 is a conceptual diagram illustrating a side view of an example proof mass assembly 300 within VBA 100 of FIG. 1. Proof mass assembly 300 may include a plurality of proof mass sub-assemblies 302A-C (collectively referred to as "proof mass sub-assemblies 302"), each of proof mass sub-assemblies 302 including a proof mass element 114 disposed between dampening plates 112 along sensing axis 102, resonators 116 disposed on surfaces of proof mass element 114, and spacers 118 disposed between dampening plates 112 and proof mass element 114 along sensing axis 102. While proof mass assembly 300 is primarily described herein as including three proof mass sub-assemblies 302A-C, proof mass assembly 300 within VBA 100 may include one, two, or four or more proof mass sub-assemblies 302.

Each of proof mass sub-assemblies 302 may be independently electrically coupled to circuitry 108. Circuitry 108 may correspond each proof mass sub-assembly 302 to one or more connectors 106. Circuitry 108 may direct electrical signals into each proof mass sub-assembly 302 and transmit sensed electrical signals from each proof mass sub-assembly 302 out of VBA 100 via connectors 106.

Each of proof mass sub-assemblies 302 may be configured for a specific acceleration range. For example, first proof mass sub-assembly 302A may monitor for acceleration values of less than 5 g, second proof mass sub-assembly 302B may monitor for acceleration values of between 2 g and 30 g, and third proof mass sub-assembly 302C may monitor for acceleration values of between 20 g and 300 g. The ranges of acceleration values are non-limiting examples of acceleration ranges for each of proof mass sub-assemblies 302. Each of proof mass sub-assemblies 302 may be configured for any range of acceleration values. Two of proof mass sub-assemblies 302 may be configured for a same range of acceleration values or for two at least partially overlapping ranges of acceleration values.

Proof mass sub-assemblies 302 may be stacked on top of each other along sensing axis 102. For example, as illustrated in FIG. 3, second proof mass sub-assembly 302B is stacked on top of first proof mass sub-assembly 302A and third proof mass sub-assembly 302C is stacked on top of second proof mass sub-assembly 302B.

Adjacent proof mass sub-assemblies 302 along sensing axis 102 (e.g., first and second proof mass sub-assemblies 302A, 302B) may share a common dampening plate 112. For example, first proof mass sub-assembly 302A may include proof mass element 114A and dampening plates 112A, 112B, second proof mass sub-assembly 302B may include proof mass element 114B and dampening plates 112B, 112C, and third proof mass sub-assembly 302C may include proof mass element 114C and dampening plates 112C, 112D. In such examples, first and second proof mass sub-assemblies 302A, 302B may share a common dampening plate 112B and second and third proof mass sub-assemblies 302B, 302C may share a common dampening plate 112C.

Each of proof mass elements 114 (e.g., proof mass elements 114A-C) may be electrically coupled to circuitry 108 through protrusions or other electrical contacts at or around the outer perimeter of proof mass elements 114. Placing the protrusions and/or electrical contacts around the outer perimeter of proof mass elements 114 as opposed to the upper and lower surfaces of proof mass elements 114 may reduce an overall profile of proof mass assembly 300 along sensing axis 102 and/or provide for improved thermal insulation of proof mass elements 114 by dampening plates 112.

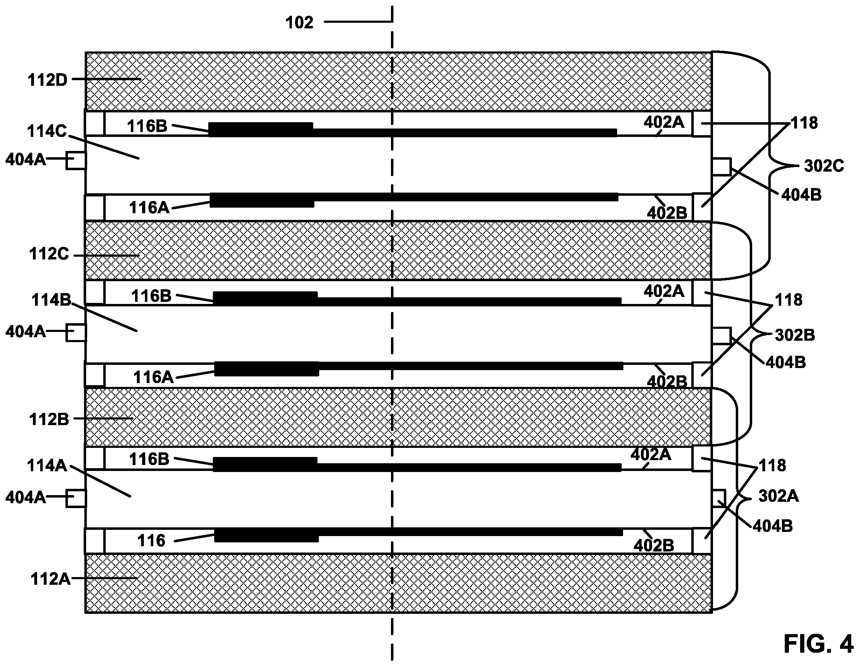

FIG. 4 is a conceptual diagram illustrating an example side view of proof mass assembly 300 of FIG. 3. As illustrated in FIG. 4, each proof mass sub-assembly 302 within proof mass assembly 300 may include proof mass element 114 (e.g., proof mass elements 114A-C), resonator 116B disposed on upper surface 402A of proof mass element 114, resonator 116A disposed on lower surface 402B, two dampening plates 112, and spacers 118 separating proof mass element 114 and the two dampening plates 112. Each proof mass element 114 may define protrusions 404A, 404B (collectively referred to herein as "protrusions 404") extending from an outer perimeter of proof mass element 114.

Spacers 118 may separate each proof mass element 114 from adjacent dampening plates 112 and may define a gap between each of surfaces 402A, 402B (collectively referred to herein as "surfaces 402") of proof mass element 114 and adjacent dampening plates 112. The gaps between proof mass element 114 and adjacent dampening plates may be sized to allow for the displacement of proof mass 202 of proof mass element 114 and the resulting flexures of resonators 116 without allowing proof mass elements 114 and/or resonators 116 to contact dampening plates 112. For example, each gap may be sized that when proof mass 202 is at full displacement along sensing axis 102 and as permitted by hinges 206, proof mass movable portion 202 and/or resonators 116 will not contact the adjacent dampening plates 112.

Within each of proof mass sub-assemblies 302, proof mass 202 of proof mass element 114 may contact one of dampening plates 112 when the acceleration of VBA 100 exceed the acceleration range proof mass element 114 is configured for. For example, the acceleration of VBA 100 may be less than or equal to a minimum acceleration value for the acceleration range or may be greater than or equal to a maximum acceleration value for the acceleration range. With multiple proof mass sub-assemblies 302, each configured for a different acceleration range, when the acceleration of VBA 100 is outside of the acceleration range for one of proof mass sub-assemblies 302 (e.g., of first proof mass sub-assembly 302A), the acceleration of VBA 100 may be within the acceleration range of another of proof mass sub-assemblies 302 (e.g., of second proof mass sub-assembly 302B, of third proof mass sub-assembly 302C). In conjunction, proof mass sub-assemblies 302 may be configured to sense across a greater acceleration range than a single proof mass sub-assembly.

Spacers 118 may be disposed along one edge of proof mass assembly 300, e.g., as illustrated in FIG. 3, of may be disposed along multiple edges (e.g., opposing edges) of proof mass assembly 300. Spacers 118 may be separate from proof mass elements 114 and/or dampening plates 112 or may be integral to proof mass elements 114 and/or dampening plates 112. Spacers 118 may be formed from a same material (e.g., an optically transparent material, a crystalline quartz) as proof mass elements 114 and/or dampening plates 112. Spacers 118 may be affixed to proof mass elements 114 and/or dampening plates 112 via an adhesive (e.g., epoxy), a mechanical fixation element, or via the interface between features (e.g., protrusions, recesses) on spacers 118 and corresponding features on proof mass elements 114 and/or dampening plates 112.

Resonators 116 may be electrically coupled to circuitry 108 of VBA 100 via protrusions 404. Each protrusion 404 may be at least partially electrically conductive. Each protrusion 404 may be coupled to a corresponding resonator 116 via electrical contacts and/or signal traces extending along a corresponding surface 402 of proof mass element 114. For example, for first proof mass sub-assembly 302A, first protrusion 404A may be electrically coupled to resonator 116A through electrical contacts and/or signal traces along lower surface 402B and second protrusion 404B may be electrically coupled to resonator 116B through electrical contacts and/or signal traces along upper surface 402A, or vice versa. Protrusions 404 may be disposed along an outer perimeter (e.g., a radially outward edge) of proof mass element 114. In some examples, protrusions 404 extend from proof mass support 204 of proof mass element 114.

Each protrusion 404 may be coupled to circuitry 108 via electrical wires affixed to the respective protrusion 404. The electrical wires may be disposed within a flexible printed circuit (FPC). Circuitry 108 may, through protrusions 404, supply an electrical signal (e.g., a drive signal) to resonators 116 to cause resonators 116 to vibrate. Circuitry 108 may, through protrusions 404, receive electrical signals from resonators 116 indicating a vibration frequency and/or a change in vibration frequency within each resonator 116.

Electrically coupling circuitry 108 to resonators 116 via protrusions 404 may provide technical advantages over other methods such as electrically coupling circuitry 108 to resonators 116 via wire bonds on surfaces 402 of proof mass element 114. The use of protrusions 404 may eliminate a need to include passageways to each of surfaces 402 of proof mass element 114 along sensing axis 102 necessary for the wire bonds, which may further reduce the profile of proof mass assembly 300 and/or proof mass sub-assemblies 302 along sensing axis 102, which may reduce the overall profile of VBA 100 along sensing axis 102. Elimination of the passageways may also allow proof mass sub-assemblies 302 to be disposed directly on top of each other along sensing axis 102 and share common dampening plates 112 without compromising the electrical connections between resonators 116 and circuitry 108. Elimination of the passageways may also allow for the use of dampening plates 112 without and/or with reduced central channels (e.g., used for passage of electrical wires extending from wire bonds in other VBAs), which may improve the thermal insulation capabilities of dampening plates 112 and reduce overheating and/or overcooling of proof mass elements 114 in response to changes in temperature.

The technical benefits to protrusions 404 may be applicable to VBA 100 with proof mass assembly 300 with any number of proof mass sub-assemblies 302, such as with only one proof mass sub-assembly 302 or with two or more proof mass sub-assemblies 302.

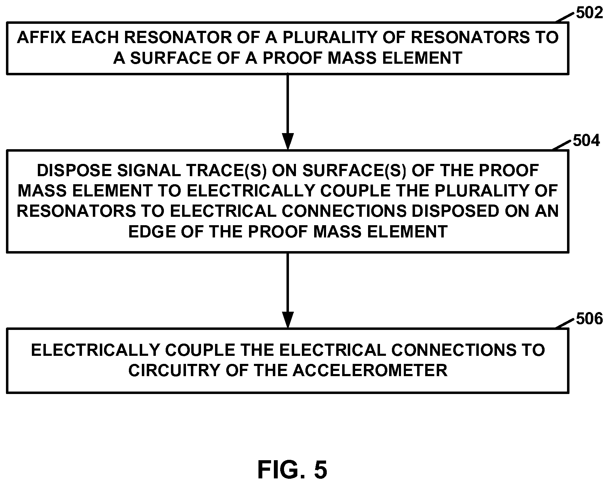

FIG. 5 is a flow chart illustrating an example process of assembling a proof mass of an example VBA 100. The example techniques illustrated in FIG. 5 are primarily described herein with reference one of proof mass sub-assemblies 302 but may be used to assembly any proof mass assembly and/or sub-assembly described herein, including a proof mass assembly with only one proof mass element 114. While the techniques illustrated in FIG. 5 are primarily described herein as being performed by a manufacturing assembly, the techniques may be performed by a manufacturing system, a plurality of manufacturing assemblies, and/or by a manufacturer. Additionally, while the techniques illustrated in FIG. 5 describe steps in one particular order, the steps may be performed in other orders.

A manufacturing assembly may affix each resonator 116 of a plurality of resonators 116 to a surface 402 of proof mass element 114 (502). Resonators 116 may be formed from a same or different material as proof mass element 114. In some examples, the manufacturing assembly form resonators 116 separately and attach each resonator 116 to an opposite surface 402 of proof mass element 114. In some examples, the manufacturing assembly forms resonators 116 as monolithic and/or integral to proof mass element 114.

The manufacturing assembly may form one or more of resonators 116 or proof mass element 114 via the SLE technique. In such examples, the manufacturing assembly may form fixation features (e.g., protrusions, recesses, channels) on surfaces 402 of proof mass element 114 and on ends 208, 210 of each resonator 116. The fixation features on ends 208, 210 of resonators 116 may interface with corresponding fixation features on a corresponding surface 402 of proof mass element 114 to affix resonators 116 to proof mass element 114. In such examples, resonators 116 may be affixed to proof mass element 114 without requiring the use of adhesives or mechanical fasteners. In other examples, the manufacturing assembly may affix resonators 116 to surfaces 402 of proof mass element 114 via adhesives (e.g., epoxy) or mechanical fasteners.

When resonators 116 are affixed to surfaces 402 of proof mass element 114, first and second ends 208, 210 of each resonator 116 may be affixed to different components of proof mass element 114. For example, first end 208 of resonator 116 may be coupled to proof mass 202 and second end 210 of resonator 116 may be coupled to proof mass support 204, or vice versa. First end 208 of resonator 116 may be connected to second end 210 via bridge 212 including one or more elongated tines.

As VBA 100 experiences acceleration along sensing axis 102, proof mass 202 may displace and/or deflect relative to proof mass support 204 (e.g., via hinges 206), which may cause resonators 116 to experience axial tensile or compressive forces in response. The elastic deflection of resonators 116 may alter the vibration frequencies of each resonator 116. The changes in vibration frequencies may be used by an accelerometer system coupled to VBA 100 to determine the direction (along sensing axis 102) and magnitude of the acceleration experienced by VBA 100.

The manufacturing assembly may dispose signal traces on surfaces 402 of proof mass element 114 to electrically couple the plurality of resonators 116 to electrical connections disposed on an edge of proof mass element 114 (504). The electrical connections on the edge of proof mass element 114 may be disposed on protrusions 404 along the outer perimeter of proof mass element 114. Each resonator 116 may be electrically coupled to a different and corresponding protrusion 404. In some examples, each protrusion 404 corresponds to a different surface 402 of proof mass element 114.

Signal traces may be disposed on surfaces 402 and may extending from one or more of ends 208, 210 of each resonator 116 to a corresponding protrusion 404. In some examples, signal traces may electrically couple each end 208, 210 of resonator 116 to a same protrusion 404 and/or to different protrusions 404. Signal traces may allow for the flow of electrical signals into resonators 116 through protrusions 404 and/or the flow of electrical signals out of resonators 116 through protrusions 404.

The manufacturing assembly may electrically couple the electrical connections to circuitry 108 of VBA 100 (506). Each protrusion 404 may be electrically coupled to one or more electrical wires. The one or more electrical wires may be electrically coupled to protrusion 404 at one end and to circuitry 108 at an opposite end. The one or more electrical wires may be disposed within an FPC. Circuitry 108 may deliver electrical signals to resonators 116 and/or receive electrical signals from resonators 116 via protrusions 404 and the one or more electrical wires.

Circuitry 108 may be affixed to base 104 of VBA 100 and may be coupled to connectors 106 extending out of base 104. Circuitry 108 may be coupled to other components of an accelerometer system (e.g., signal generation circuitry, processors, processing circuitry) via connectors 106. Circuitry 108 may receive electrical signals (e.g., drive signals) via connectors 106 and may transmit the electrical signals to resonators 116, e.g., to cause resonators 116 to vibrate. Circuitry 108 may receive electrical signals from resonators 116 and may transmit the received electrical signals to the accelerometer system via connectors 106.

Processors and/or processing circuitry of the accelerometer system may determine an acceleration of VBA 100 based on the received electrical signals and/or sensor signals. For examples, the processors and/or processing circuitry determine, based on the received electrical signals, a magnitude and a direction of deflection of proof mass movable portion 202 along sensing axis 102. The processors and/or processing circuitry may then determine a magnitude and a direction of the acceleration experienced by VBA 100 based on the magnitude and the direction of the deflection of proof mass movable portion 202.

In some examples, proof mass assembly 300 of VBA 100 includes a plurality of proof mass sub-assemblies 302. The manufacturing assembly may perform the technique described in steps 502-506 to assemble each proof mass sub-assembly 302 and electrically couple resonators 116 of each proof mass sub-assembly 302 to circuitry 108 of VBA 100. In such examples, the accelerometer system may determine the direction (along sensing axis 102) and magnitude of the acceleration experienced by VBA 100 based on the received electrical signals from resonators 116 from one or more proof mass sub-assemblies 302 of the plurality of proof mass sub-assemblies 302. Each proof mass sub-assembly 302 may include proof mass element 114 and/or resonators 116 configured for a different range of acceleration magnitudes. The accelerometer system may monitor a greater range of acceleration values using electrical signals from resonators 116 of the plurality of proof mass sub-assemblies 302 compared to electrical signals from resonators 116 of another VBA with a single proof mass element 114.

An accelerometer system with VBA 100 with a plurality of proof mass-subassemblies 302 may provide several technological advantages of another accelerometer system with multiple VBAs with single proof mass elements. Within proof mass assembly 300, proof mass sub-assemblies 302 may receive the same input acceleration and monolithically receive the input acceleration. By comparison, multiple VBAs arranged along the sensing axis may receive input accelerations with variations (e.g., resulting from differences in VBA positions, VBA orientations, materials contacting each VBA, etc.), which may reduce the accuracy of the output of the VBAs. Thus, the inclusion of proof mass assembly 300 with a plurality of proof mass sub-assemblies 302 may allow for a more accurate determination of the acceleration of VBA 100 compared to an otherwise identical accelerometer system with multiple single-proof mass element VBAs.

VBA 100 with proof mass assembly 300 including a plurality of proof mass sub-assemblies 302 may exhibit a reduced volume and/or profile compared to a plurality of single-proof mass element VBAs that collectively includes a same number of proof mass elements as proof mass assembly 300.

VBA 100 with proof mass assembly 300 including a plurality of proof mass sub-assemblies 302 may reduce and/or eliminate the effects of environmental factors on the accuracy of the outputs of VBA 100. In an otherwise identical accelerometer system with multiple single-proof mass element VBAs, each proof mass element is disposed within a separate sealed environment and may be subject to the effects of environmental factors within the sealed environment. Variations in the environmental factors across the different sealed environments may affect proof mass elements, and the resulting outputs of the corresponding VBAs in different ways, which may reduce the overall accuracy of the accelerometer systems. VBA 100 disposes all proof mass elements 114 of proof mass sub-assemblies 302 within a single sealed environment (e.g., as defined by base 104, isolator 110, and housing 120), which would subject all proof mass elements 114 to the same environmental factors. Subjecting all proof mass elements 114 to the same environmental factors may improve the accuracy of the output by reducing error resulting from subjecting different proof mass elements 114 to different environmental conditions.

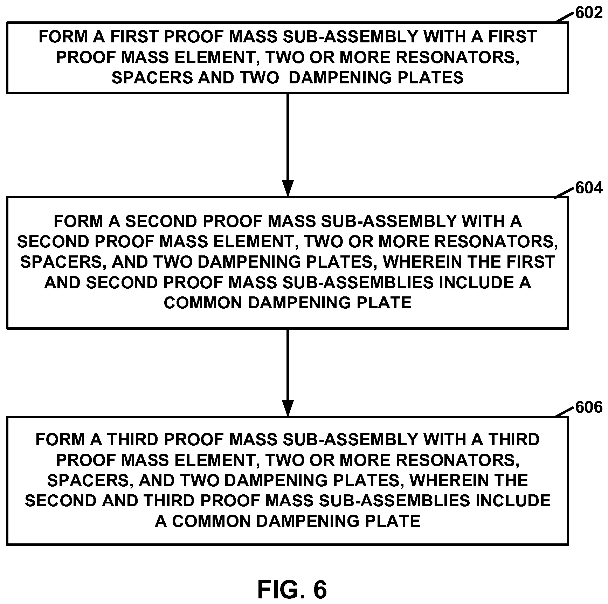

FIG. 6 is a flow chart illustrating an example process of forming a proof mass assembly 300 of an example VBA 100. While FIG. 6 is primarily described with respect to proof mass assembly 300 of VBA 100 of FIGS. 1-4, the techniques may be used form any other proof mass assembly described herein. While the techniques illustrated in FIG. 6 are primarily described herein as being performed by a manufacturing assembly, the techniques may be performed by a manufacturing system, a plurality of manufacturing assemblies, and/or by a manufacturer. Additionally, while the techniques illustrated in FIG. 6 describe steps in one particular order, the steps may be performed in other orders.

The manufacturing assembly may form a first proof mass sub-assembly 302A with a first proof mass element 114A, two or more resonators 116, spacers 118, and dampening plates 112A, 112B (602). First proof mass sub-assembly 302A may be configured for a particular range of acceleration values (e.g., acceleration magnitudes). In some examples, first proof mass element 114A and/or the two or more resonators 116 are configured for the particular range of acceleration values. For example, the dimensions of proof mass 202 and/or hinges 206 of first proof mass element 114A and/or the dimensions of bridge 212 (e.g., of the elongated tines(s) forming bridge 212) of each resonator 116 may be varied to configure the first proof mass element 114A and/or resonators 116 for a specific acceleration range. When VBA 100 experiences an acceleration with a magnitude within the specific range for first proof mass sub-assembly 302A, proof mass 202 may deflect along sensing axis 102 (e.g., without contacting dampening plates 112A, 112B) and cause resonators 116 to experience axial tensile or compressive force, e.g., at a magnitude corresponding to the magnitude of the acceleration. The specific range of acceleration values may be less than 5 g, between 2 g and 30 g, or between 20 g and 300 g. In other examples, first proof mass sub-assembly 302A may be configured to other ranges of acceleration values.

The manufacturing assembly may form first proof mass element 114A from an optically transparent material such as a crystalline quartz. The manufacturing assembly may form first proof mass element 114A via an etching (e.g., chemical etching, laser etching), SLE, or micro-electromechanical systems (MEMS) manufacturing technique. The manufacturing assembly may affix two or more resonators 116 to opposite surfaces 402 of proof mass element 114 (e.g., one or more resonators 116 on each of surfaces 402), e.g., in accordance with the example technique previously described above with respect to FIG. 5.

The manufacturing assembly may place dampening plates 112A, 112B on opposite sides of first proof mass element 114A along sensing axis 102. Each of dampening plates 112A, 112B may be separated from a corresponding surface 402 of first proof mass element 114A via one or more spacers 118. Spacers 118 may define gaps between dampening plates 112A, 112B and first proof mass element 114A, e.g., to allow for the deflection of proof mass 202 along sensing axis 102 without contacting dampening plates 112A, 112B when VBA 100 is under acceleration (e.g., within the acceleration range first proof mass sub-assembly 302A is configured for). Spacers 118 may be formed separately and/or may be integral to one or more of first proof mass element 114A or dampening plates 112A, 112B.

First proof mass element 114A, spacers 118, and/or dampening plates 112A, 112B may be formed from a same material (e.g., an optically transparent material, a crystalline quartz). The use of a same material to form first proof mass element 114A, spacers 118, and/or dampening plates 112A, 112B may reduce a CTE mismatch at junctions between the different components and improve accuracy of VBA 100, e.g., be reducing and/or eliminating the effects of thermal strain and/or stress from the CTE mismatch on the output electrical signals of VBA 100.

First proof mass element 114A may be affixed to spacers 118 and/or dampening plates 112A, 112B via an adhesive or mechanical fastener(s). The manufacturing assembly may form fixation features (e.g., protrusions, recesses, channels) on surfaces of first proof mass element 114A, spacers 118 and/or dampening plates 112A, 112B. The manufacturing assembly may couple first proof mass element 114A, spacers 118, and/or dampening plates 112A, 112B to each other by coupling fixation features on a surface of one component to corresponding fixation features on a corresponding surface of another component. For example, the manufacturing assembly may couple protrusions on spacers 118 to recesses on surfaces of first proof mass element 114A or dampening plates 112A, 112B to affix the components together.

The manufacturing assembly may form a second proof mass sub-assembly 302B with a second proof mass element 114B, two or more resonators 116, spacers 118, and dampening plates 112B, 112C, wherein the first and second proof mass sub-assemblies 302A, 302B include a common dampening plate 112B (604). Second proof mass sub-assembly 302B may configured for a range of acceleration values different from the range of acceleration values for first proof mass sub-assembly 302A. The range of acceleration values for second proof mass sub-assembly 302B may be greater than or less than the range of acceleration values for first proof mass sub-assembly 302A. The ranges of acceleration values for first and second proof mass sub-assemblies 302A, 302B, may at least partially overlap. Second proof mass element 114B and corresponding resonators 116 may be configured for the range of acceleration values for second proof mass sub-assembly 302B.

The manufacturing assembly may form second proof mass sub-assembly 302B in a same manner as previously described herein, e.g., with respect to first proof mass sub-assembly 302A. Second proof mass sub-assembly 302B may be disposed on top of or below first proof mass sub-assembly 302A along sensing axis 102. First proof mass sub-assembly 302A and second proof mass sub-assembly 302B may share a common dampening plate 112 (e.g., dampening plate 112B). Dampening plate 112B may limit a range of rotation, motion, and/or displacement of first proof mass element 114A within first proof mass sub-assembly 302A and of second proof mass element 114B within second proof mass sub-assembly 302B. Dampening plate 112B may be attached (e.g., directly or via spacer(s) 118) to first proof mass element 114A along one surface and to second proof mass element 114B along an opposite surface.

The manufacturing assembly may form a third proof mass sub-assembly 302C with a third proof mass element 114C, two or more resonators 116, and dampening plates 112C, 112D, wherein the second and third proof mass sub-assemblies 302B, 302C include a common dampening plate 112C (606). Third proof mass sub-assembly 302C may be configured to a specific range of acceleration values different from the ranges of acceleration values for first and second proof mass sub-assemblies 302A, 302B. The range for third proof mass sub-assembly 302C may be greater than, less than, or between the ranges for first and second proof mass sub-assemblies 302A, 302B. The range for third proof mass sub-assembly 302C may at least partially overlap with the ranges for first and second proof mass sub-assemblies 302A, 302B. Third proof mass element 114C and resonators 116 coupled to third proof mass element 114C may be configured for the range of acceleration values for third proof mass sub-assembly 302C.

The manufacturing assembly may form third proof mass sub-assembly 302C, e.g., in accordance with techniques previously described within relative to the first and second proof mass sub-assemblies 302A, 302B. The manufacturing assembly may dispose third proof mass sub-assembly 302C on top of or below second proof mass sub-assembly 302B along sensing axis 102.

Third proof mass sub-assembly 302C may share a common dampening plate 112C with second proof mass sub-assembly 302B. In such examples, dampening plate 112C may be coupled to second proof mass element 114B (e.g., directly or via spacer(s) 118) along one surface and to third proof mass element 114C along an opposite surface.

In some examples, first proof mass sub-assembly 302A is disposed between second and third proof mass sub-assemblies 302B, 302C along sensing axis 102. In such examples, first proof mass sub-assembly 302A may share a common dampening plate 112 (e.g., dampening plate 112B) with second proof mass sub-assembly 302B and another common dampening plate 112 (e.g., dampening plate 112A) with third proof mass sub-assembly 302C.

Each of proof mass sub-assemblies 302 may be separately electrically coupled to circuitry 108 of VBA 100. While FIG. 6 is described with respect to three proof mass sub-assemblies 302A-C, the example technique described above may be used form proof mass assembly 300 with two or four or more proof mass sub-assemblies 302. In such examples, each proof mass sub-assembly 302 may be configured to a different range of acceleration values than one or more other proof mass sub-assembly 302 within proof mass assembly 300.

This disclosure describes the following examples:
Example 1: an accelerometer system comprising an accelerometer comprising a proof mass assembly the proof mass assembly comprising: a plurality of dampening plates; at least two proof mass elements, wherein each proof mass element of the at least two proof mass elements is disposed between two dampening plates of the plurality of dampening plates; and a plurality of resonators, wherein at least two resonators of the plurality of resonators is coupled to each proof mass element of the at least two proof mass elements.
Example 2: the accelerometer system of example 1, wherein each proof mass element is configured for a different range of acceleration values.
Example 3: the accelerometer system of any of examples 1 or 2, wherein the proof mass assembly defines a sensing axis extending from a proximal end of the proof mass assembly to a distal end of the proof mass assembly, and wherein the at least two proof mass elements are arranged along the sensing axis, each proof mass element defining an outer surface that defines a reference plane orthogonal to the sensing axis.
Example 4: the accelerometer system of example 3, wherein each pair of adjacent proof mass elements along the sensing axis are separated by a single dampening plate of the plurality of dampening plates.
Example 5: the accelerometer system of any of examples 3 or 4, wherein the outer surface comprises a first outer surface, wherein each proof mass element of the at least two proof mass elements defines: the first outer surface; and a second outer surface substantially parallel to the first outer surface, wherein for each proof mass element, a first resonator of the at least two resonators is coupled to the first outer surface and a second resonator of the at least two resonators is coupled to the second outer surface.
Example 6: the accelerometer system of any of examples 1-5, further comprising a plurality of spacers, wherein each proof mass element of the at least two proof mass elements is separated from a dampening plate of the plurality of dampening plates by at least one spacer of the plurality of spacers.
Example 7: the accelerometer system of example 6, wherein each spacer of the plurality of spacers is integral to one or more of a respective proof mass element of the at least two proof mass elements or a respective dampening plate of the plurality of dampening plates.
Example 8: the accelerometer system of any of examples 1-7, wherein at least one of the at least two proof mass elements or the plurality of dampening plates is formed from an optically transparent material.
Example 9: the accelerometer system of example 8, wherein the optically transparent material comprises a crystalline quartz.
Example 10: the accelerometer system of any of examples 8 or 9, wherein the at least two proof mass elements and the plurality of resonators are formed from the optically transparent material.
Example 11: the accelerometer system of any of examples 1-10, further comprising a processor, wherein each proof mass element of the at least two proof mass element defines at least two protrusions along an outer perimeter of the proof mass element, wherein each protrusion of the at least two protrusions is configured to electrically couple a respective resonator of the at least two resonators to the processor.
Example 12: a proof mass assembly for an accelerometer system, the proof mass assembly comprising a plurality of proof mass sub-assemblies, each proof mass sub-assembly comprising: a proof mass element; two dampening plates, wherein the proof mass element is disposed between the two dampening plates along a sensing axis of the accelerometer system; and at least two resonators, each resonator of the at least two resonator being coupled to an opposite surface of the proof mass element, wherein each proof mass sub-assembly of the plurality of proof mass sub-assemblies is configured to react in response to a different range of acceleration values.
Example 13: the proof mass assembly of example 12, wherein the plurality of proof mass sub-assemblies are adjacent to each other along the sensing axis, and wherein two adjacent proof mass sub-assemblies of the plurality of proof mass sub-assemblies share a common dampening plate.
Example 14: the proof mass assembly of any of examples 12 or 13, wherein each proof mass sub-assembly of the plurality of proof mass sub-assemblies further comprises: a plurality of spacers, each spacer of the plurality of spacer separating the proof mass element and one dampening plate of the two dampening plates and forming a gap between the proof mass element and the one dampening plate, wherein a resonator of the at least two resonators is disposed within the gap.
Example 15: the proof mass assembly of example 14, wherein each spacer of the plurality of spacers is integral to at least one of the proof mass element or to the one dampening plate.
Example 16: the proof mass assembly of any of examples 12-15, wherein at least one of the proof mass element or two dampening plates is formed from an optically transparent material.
Example 17: an accelerometer system comprising: a processor; and an accelerometer comprising a proof mass assembly the proof mass assembly comprising: two dampening plates; a proof mass element disposed between the two dampening plates of; two resonators, wherein each resonator of the two resonators is coupled to an opposite surface of the proof mass element; two protrusions extending from an outer perimeter of the proof mass element; and signal traces extending between each resonator and a respective protrusion, wherein the processor is configured to determine an acceleration experienced by the accelerometer based on electrical signals from the two resonators, and wherein the two resonators are electrically coupled to the processor through the two protrusions.
Example 18: the accelerometer system of example 17, wherein the proof mass element and the two resonators are formed from a same optically transparent material.
Example 19: the accelerometer system of example 18, wherein each protrusion of the two protrusions is electrically coupled to a portion of the signal traces extending along a same surface of the proof mass element as the respective resonator of the two resonators.
Example 20: the accelerometer system of any of examples 17-19, further comprising a plurality of spacers, wherein spacer of the plurality of spacer is configured to separate the proof mass element from a dampening plate of the two dampening plates, and wherein each spacer is integral to one or more of the proof mass element or the dampening plate.

In one or more examples, the accelerometers described herein may utilize hardware, software, firmware, or any combination thereof for achieving the functions described. Those functions implemented in software may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure.

Instructions may be executed by one or more processors within the accelerometer or communicatively coupled to the accelerometer. The one or more processors may, for example, include one or more DSPs, general purpose microprocessors, application specific integrated circuits ASICs, FPGAs, or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for performing the techniques described herein. Also, the techniques could be fully implemented in one or more circuits or logic elements.

The techniques of this disclosure may be implemented in a wide variety of devices or apparatuses that include integrated circuits (ICs) or sets of ICs (e.g., chip sets). Various components, modules, or units are described in this disclosure to emphasize functional aspects of devices configured to perform the disclosed techniques, but do not necessarily require realization by different hardware units. Rather, various units may be combined or provided by a collection of interoperative hardware units, including one or more processors as described above, in conjunction with suitable software and/or firmware.

Various examples have been described. These and other examples are within the scope of the following claims.

## Claims

1. An accelerometer system comprising an accelerometer comprising a proof mass assembly the proof mass assembly comprising:
a plurality of dampening plates;
at least two proof mass elements, wherein each proof mass element of the at least two proof mass elements is disposed between two dampening plates of the plurality of dampening plates; and
a plurality of resonators, wherein at least two resonators of the plurality of resonators is coupled to each proof mass element of the at least two proof mass elements.

2. The accelerometer system of claim 1, wherein each proof mass element is configured for a different range of acceleration values.

3. The accelerometer system of any of claims 1 and 2, wherein the proof mass assembly defines a sensing axis extending from a proximal end of the proof mass assembly to a distal end of the proof mass assembly, and wherein the at least two proof mass elements are arranged along the sensing axis, each proof mass element defining an outer surface that defines a reference plane orthogonal to the sensing axis.

4. The accelerometer system of claim 3, wherein each pair of adjacent proof mass elements along the sensing axis are separated by a single dampening plate of the plurality of dampening plates.

5. The accelerometer system of any of claims 3 and 4, wherein the outer surface comprises a first outer surface, wherein each proof mass element of the at least two proof mass elements defines:
the first outer surface; and
a second outer surface substantially parallel to the first outer surface,
wherein for each proof mass element, a first resonator of the at least two resonators is coupled to the first outer surface and a second resonator of the at least two resonators is coupled to the second outer surface.

6. The accelerometer system of any of claims 1-5, further comprising a plurality of spacers, wherein each proof mass element of the at least two proof mass elements is separated from a dampening plate of the plurality of dampening plates by at least one spacer of the plurality of spacers.

7. The accelerometer system of claim 6, wherein each spacer of the plurality of spacers is integral to one or more of a respective proof mass element of the at least two proof mass elements or a respective dampening plate of the plurality of dampening plates.

8. The accelerometer system of any of claims 1-7, wherein at least one of the at least two proof mass elements or the plurality of dampening plates is formed from an optically transparent material.

9. The accelerometer system of claim 8, wherein the optically transparent material comprises a crystalline quartz.

10. The accelerometer system of any of claims 8 and 9, wherein the at least two proof mass elements and the plurality of resonators are formed from the optically transparent material.

11. The accelerometer system of any of claims 1-10, further comprising a processor, wherein each proof mass element of the at least two proof mass element defines at least two protrusions along an outer perimeter of the proof mass element, wherein each protrusion of the at least two protrusions is configured to electrically couple a respective resonator of the at least two resonators to the processor.

12. A proof mass assembly for an accelerometer system, the proof mass assembly comprising a plurality of proof mass sub-assemblies, each proof mass sub-assembly comprising:
a proof mass element;
two dampening plates, wherein the proof mass element is disposed between the two dampening plates along a sensing axis of the accelerometer system; and
at least two resonators, each resonator of the at least two resonator being coupled to an opposite surface of the proof mass element,
wherein each proof mass sub-assembly of the plurality of proof mass sub-assemblies is configured to react in response to a different range of acceleration values.

13. The proof mass assembly of claim 12, wherein the plurality of proof mass sub-assemblies are adjacent to each other along the sensing axis, and wherein two adjacent proof mass sub-assemblies of the plurality of proof mass sub-assemblies share a common dampening plate.

14. The proof mass assembly of any of claims 12 and 13, wherein each proof mass sub-assembly of the plurality of proof mass sub-assemblies further comprises:
a plurality of spacers, each spacer of the plurality of spacer separating the proof mass element and one dampening plate of the two dampening plates and forming a gap between the proof mass element and the one dampening plate,
wherein a resonator of the at least two resonators is disposed within the gap.

15. The proof mass assembly of claim 14, wherein each spacer of the plurality of spacers is integral to at least one of the proof mass element or to the one dampening plate.
